# EUROPÄISCHE PATENTSCHRIFT

(11) **EP 2 937 594 B1**
(45) Veröffentlichungstag und Bekanntmachung des Hinweises auf die Patenterteilung: **13.12.2017**
(21) Anmeldenummer: 15161829.5
(22) Anmeldetag: 31.03.2015
(51) Int. Cl.: F16F 9/32, F16F 9/02

(54) **GASDRUCKFEDER**
GAS COMPRESSION SPRING
VÉRIN À GAZ

(30) Priorität: 31.03.2014 DE 102014104481
(43) Veröffentlichungstag der Anmeldung: 28.10.2015
(73) Patentinhaber: Steinel Normalien AG, 78056 Villingen-Schwenningen (DE)
(72) Erfinder: Elfers, Heinz, 78056 Villingen-Schwenningen (DE); Feisthammel, Horst, 88662 Überlingen (DE)
(74) Vertreter: Westphal, Mussgnug & Partner Patentanwälte mbB

(56) Entgegenhaltungen:
- EP-A2- 2 937 592
- DE-A1-102005 048 745
- DE-A1-102007 034 416
- DE-A1-102009 032 897
- DE-A1-102009 042 196

## Beschreibung

Die Erfindung betrifft eine Gasdruckfeder gemäß dem Oberbegriff des Patentanspruchs 1.

Gasdruckfedern weisen üblicherweise ein zylindrisches Gehäuse mit einer Wandung, einem Bodenteil und einem eine Öffnung aufweisenden Deckelteil sowie einer Längsachse auf, wobei in dem Gehäuse entlang der Längsachse ein Kolben mit einer Außenfläche , einer Stirnseite und einer durch die Öffnung geführten Kolbenstange verschiebbar angeordnet ist. Zwischen der Stirnseite des Kolbens und dem Bodenteil des Gehäuses ist eine Gaskompressionskammer gebildet. Derartige Gasdruckfedern werden insbesondere in Werkzeugen oder Maschinen eingesetzt, um Hubbewegungen durchzuführen.

Ein häufig verwendetes Gas zur Befüllung der Gasdruckfedern ist Stickstoff. Gasdruckfedern sind mit Stickstoff oft bei Drucken zwischen 120 und 220 bar gefüllt. Zur Sicherheitsüberwachung ist es beispielsweise aus der DE 10 2007 034 416 A1 bekannt, Gasdruckfedern mit einem Sensor zur Überwachung von physikalischen Messgrößen innerhalb und/oder an der Gasdruckfeder auszustatten. Die Auswertung und Weiterverarbeitung der mit dem Sensor detektierten Werte der physikalischen Messgrößen erfolgt dabei in einer externen Auswerteeinheit, insbesondere zentral für eine Vielzahl von Gasdruckfedern. Durch dieses System kann eine Zustandsüberwachung erfolgen und festgestellt werden, ob aktuell ein Fehler an der jeweiligen Gasdruckfeder vorliegt. Aus DE 10 2007 034 416 A1, welches den nächstliegenden Stand der Technik bildet, ist es bekannt Umgebungsbedingungen zu überwachen, um die Leistungscharakteristik von Gasdruckfedern abhängig von den herrschenden Umgebungsbedingungen vorherzusagen. EP 2 937 592 A2 offenbart ein Federbein mit einer eine Mischung aus Öl und Gas enthaltenden Kammer, bei dem Druck und Temperatur überwacht werden, um auf die Höhe des Verlusts an Öl und Gas zu schließen, und damit die nächste Maintenance zu planen.

Bislang wird die Lebensdauer von Gasdruckfedern lediglich grob geschätzt. Dabei wird für einen bestimmten Typ einer Gasdruckfeder jeweils die gleiche Lebensdauer angegeben, unabhängig von der Art der Verwendung der Gasdruckfeder. Bei in Werkzeugen oder Maschinen eingebauten Gasdruckfedern muss die Gasdruckfeder spätestens ausgetauscht werden, wenn diese tatsächlich defekt ist, was jedoch auch zum Ausfall oder Stillstand des entsprechenden Werkzeugs oder der Maschine führt. Alternativ wird eine Gasdruckfeder kurz vor Erreichen der geschätzten Lebensdauer vorsorglich ausgetauscht, obwohl sie möglicherweise noch eine gewisse Zeit funktionstüchtig sein könnte.

Die Aufgabe der Erfindung besteht daher darin, eine gezielte Instandhaltung von mit einer Gasdruckfeder oder mehreren Gasdruckfedern ausgestatteten Werkzeugen oder Maschinen zu ermöglichen.

Die Aufgabe wird erfindungsgemäß gelöst durch eine Gasdruckfeder mit den Merkmalen des Patentanspruchs 1. Die Aufgabe wird weiterhin gelöst durch eine Vorrichtung zur Überwachung wenigstens einer Gasdruckfeder mit den Merkmalen des Patentanspruchs 10 Vorteilhafte Ausgestaltungen und Weiterbildungen der Erfindung sind in den abhängigen Ansprüchen angegeben.

Die erfindungsgemäße Gasdruckfeder mit einem zylindrischen Gehäuse, welches eine Wandung, ein Bodenteil und ein eine Öffnung aufweisendes Deckelteil sowie eine Längsachse aufweist, und mit einem in dem Gehäuse entlang der Längsachse verschiebbaren Kolben mit einer Außenfläche und einer Stirnseite, wobei zwischen dem Kolben und dem Gehäuse eine Gaskompressionskammer gebildet ist und wobei die Gasdruckfeder wenigstens einen Sensor zur Detektion wenigstens einer physikalischen Größe aufweist, zeichnet sich dadurch aus, dass die Gasdruckfeder Mittel zur Bestimmung der Restlebensdauer der Gasdruckfeder aus den mit den wenigstens einen Sensor detektierten Werten der wenigstens einen physikalischen Größe aufweist, wobei die Mittel eine Auswerteeinheit aufweisen, in welcher die Bestimmung der Restlebensdauer der Gasdruckfeder erfolgt, dass die Auswerteeinheit einen Speicher zur Speicherung der mit dem wenigstens einen Sensor detektierten Werte der wenigstens einen physikalischen Größe in Abhängigkeit von der Zeit aufweist, wobei die Auswerteeinheit derart ausgebildet ist, dass die mit dem wenigstens einen Sensor detektierten Werte der wenigstens einen physikalischen Größe in Abhängigkeit von der Zeit gespeichert und zur Bestimmung der Restlebensdauer herangezogen werden und wobei die Auswerteeinheit derart ausgebildet ist, dass die Bestimmung der Lebensdauer durch Vergleich der mit dem wenigstens einen Sensor detektierten Werte der wenigstens einen physikalischen Größe in Abhängigkeit von der Zeit mit einem in der Auswerteeinheit hinterlegten, in Langzeitversuchen mit Gasdruckfedern ermittelten Kennfeld erfolgt. Erfindungsgemäß wird die Restlebensdauer in Abhängigkeit von den mit dem wenigstens einen Sensor detektierten Werten der wenigstens einen physikalischen Größe bestimmt, sodass die bislang erfolgte Verwendung, Belastung und/oder Einbausituation der Gasdruckfeder bei der Bestimmung der Restlebensdauer berücksichtigt wird und somit eine individuelle Bestimmung der Restlebensdauer möglich ist. Eine in oder an der Gasdruckfeder angeordnete Auswerteeinheit ermöglicht die Bestimmung der Restlebensdauer individuell in jeder Gasdruckfeder. Mit dem Speicher wird es ermöglicht, die physikalischen Bedingungen, welche in der Gasdruckfeder über die Lebensdauer bis zum Zeitpunkt der Bestimmung der Restlebensdauer angefallen sind, aufzuzeichnen, um auf sie rückgreifen zu können. Die Bestimmung der Restlebensdauer berücksichtigt somit die Bedingungen, welchen die Gasdruckfeder über die bis zum Zeitpunkt der Bestimmung der Restlebensdauer ausgesetzt war, und kann somit zuverlässige Aussagen über die Restlebensdauer treffen. Das Kennfeld wird in Langzeitversuchen mit Gasdruckfedern ermittelt und umfasst mehrere Kennlinien. Eine Kennlinie beschreibt die Abhängigkeit der Lebensdauer von einer bestimmten physikalischen Größe. Zur Erstellung des Kennlinienfelds, kurz Kennfeld genannt, wird die Abhängigkeit der Lebensdauer bei Variation einer physikalischen Größe, während andere physikalische Größen konstant gehalten werden, bestimmt. Das so bestimmte Kennfeld wird in der Auswerteeinheit hinterlegt, um die Lebensdauerbestimmung zu ermöglichen.

In einer Ausführungsform ist die Gaskompressionskammer zwischen der Stirnseite des Kolbens und dem Bodenteil des Gehäuses gebildet, wobei die Außenfläche des Kolbens gegen die Wandung des Gehäuses abgedichtet ist, so dass eine sogenannte Ein-Kammer-Gaskompressionskammer gebildet wird. In einer alternativen Ausführungsform weist die Gaskompressionskammer zwei Kammern auf, wobei eine erste Kammer zwischen dem Kolben und dem Deckelteil und eine zweite Kammer zwischen der Stirnseite des Kolbens und dem Bodenteil des Gehäuses gebildet ist, so dass eine sogenannte Zwei-Kammer-Gaskompressionskammer gebildet wird. Bei einer Zwei-Kammer-Gaskompressionskammer ist ein Gasfluss von dem Bereich zwischen dem Kolben und dem Deckelteil zu dem Bereich zwischen dem Kolben und dem Bodenteil zwischen der Außenfläche des Kolbens und der Wandung des Gehäuses möglich, während eine Abdichtung der Gaskompressionskammer zwischen der Kolbenstange und dem Gehäuse in der Öffnung des Deckelteils erfolgt.

Gemäß einer besonders bevorzugten Ausführungsform der Erfindung sind die Mittel zur Bestimmung der Restlebensdauer der Gasdruckfeder direkt an oder in der Gasdruckfeder angeordnet, sodass für jede einzelne Gasdruckfeder jeweils aktuell die Restlebensdauer bestimmt werden kann und falls gewünscht eine Anzeige oder Ausgabe eines entsprechenden Signals direkt an der Gasdruckfeder möglich ist.

Gemäß einer besonders bevorzugten Weiterbildung der Erfindung ist die aktuelle Restlebensdauer in dem Speicher hinterlegt. Bei Bedarf kann somit die jeweils aktuelle Restlebensdauer abgefragt werden, um beispielsweise festzustellen, ob eine auf Lager befindliche Gasdruckfeder zu einem bestimmten Verwendungszweck eingebaut werden könnte oder eine eingebaute Gasdruckfeder kurzfristig ausgetauscht werden sollte, da in Kürze ein Ausfall der Gasdruckfeder zu erwarten ist.

Vorteilhafterweise vergleicht die Auswerteeinheit die detektierten Werte der wenigsten einen physikalischen Größe mit hinterlegten Werten. Dadurch ist zusätzlich zu der Bestimmung der Restlebensdauer auch eine Überwachung des aktuellen Zustands der Gasdruckfeder möglich, da beispielsweise Temperatur oder Druck auf diese Weise aktuell detektiert werden können und Über- oder Unterschreitungen von festgelegten Grenzwerten aktuell überwacht werden können.

Als physikalische Größen können insbesondere Druck, Temperatur, Geschwindigkeit, Kraft, Vibration, Dehnung und/oder Weg detektiert werden. Besonders bevorzugt weist die Gasdruckfeder wenigstens einen Druck und einen Temperatursensor auf, welche auch in einem Sensor kombiniert sein können, da der Druck und die Temperatur in einer Gasdruckfeder die zuverlässigsten Aussagen über den Zustand der Gasdruckfeder machen können.

Vorteilhafterweise erfolgt die Energieversorgung des Sensors mittels einer Batterie, mittels eines Kabels oder Mittels Energy Harvesting. Drahtlose Energieversorgungen sind dabei bevorzugt, um die Einbaumöglichkeiten der Gasdruckfeder in Werkzeuge oder Maschinen möglichst wenig zu beschränken.

Vorzugsweise weisen die Mittel eine Datenübertragungsschnittstelle auf, welche vorzugsweise als Kabelanschluss, als lichtgestützte Schnittstelle, als Schnittstelle mit induktiver oder kapazitiver Kopplung oder als drahtlose Schnittstelle, insbesondere als Funkmodul, ausgebildet ist. Dies ermöglicht das Auslesen der in der Gasdruckfeder ermittelten und/oder hinterlegten Daten und Werte, entweder beispielsweise zur direkten Anzeige an der Gasdruckfeder oder zur Übertragung an eine zentrale Datenerfassungs- und/oder Auswerteeinheit zur zusätzlichen zentralen Überwachung und Auswertung.

Vorzugsweise ist die Datenübertragungsschnittstelle zyklisch und/oder in Abhängigkeit von der Position des Kolbens in dem Gehäuse und/oder in Abhängigkeit von der aktuellen Einbausituation der Gasdruckfeder aktivierbar. Eine zyklische Aktivierung ist zur regelmäßigen Überwachung sinnvoll. Um jedoch keine Datenübertragung zu aktivieren, wenn die Gasdruckfeder im eingebauten Zustand in einem Werkzeug oder in einer Maschine vollständig abgeschirmt ist, sodass keine Daten aus der Gasdruckfeder nach außen übertragen werden können, kann bei der Aktivierung auch die Position des Kolbens, aus welcher auf geöffnete oder geschlossene Werkzeuge rückgeschlossen werden kann, oder die aktuelle Einbausituation berücksichtigt werden.

Vorzugsweise weist die Gasdruckfeder Mittel zur Abgabe eines Alarmsignals, insbesondere eines optischen, akustischen oder elektronischen Alarmsignals, auf. Das Alarmsignal kann einerseits ausgelöst werden, wenn die Restlebensdauer einen bestimmten Wert unterschreitet, oder andererseits wenn eine oder mehrere der detektierten physikalischen Größen hinterlegte Werte, beispielsweise Maximal- oder Minimalwerte, über- oder unterschreitet.

Die erfindungsgemäße Vorrichtung zur Überwachung wenigstens einer, vorzugsweise mehrerer erfindungsgemäßer Gasdruckfedern weist eine, vorzugsweise mehrere erfindungsgemäße Gasdruckfedern, wenigstens eine Auswerteeinheit und Mittel zur Übertragung von Signalen zwischen der Auswerteeinheit und jeder der Gasdruckfedern auf.

Vorteilhafterweise weist die Auswerteeinheit Mittel zur Abgabe eines Alarmsignals, insbesondere eines optischen, akustischen oder elektronischen Alarmsignals, und/oder Mittel zum Auslösen einer Sicherheitsfunktion, beispielsweise zum Anhalten einer Maschine oder zum Drucklosstellen der Gasdruckfeder (10), auf. Ein Alarmsignal macht zunächst lediglich darauf aufmerksam, dass die entsprechende Gasdruckfeder entweder nicht funktionstüchtig ist oder möglicherweise in kurzer Zeit funktionsuntüchtig wird. Die Sicherheitsfunktion ergreift im Falle eines Funktionsausfalls oder auch eines zu befürchtenden Funktionsausfalls einer Gasdruckfeder bereits entsprechende Maßnahmen, um Gefährdungen von Personen oder Maschinen zu verhindern, beispielsweise durch Anhalten oder Ausschalten von Maschinen oder durch Drucklosstellen der entsprechenden Gasdruckfeder, indem der Überdruck in der Gasdruckfeder beispielsweise durch ein Sicherheitsventil der Gasdruckfeder, abgelassen wird. Insbesondere, wenn die Gasdruckfedern in Maschinen oder Werkzeugen verbaut sind, bietet sich die Abgabe eines Alarmsignals an einer zentralen Stelle wie beispielsweise der Vorrichtung zur Überwachung mehrerer Gasdruckfedern an, um eine regelmäßige Überwachung sämtlicher verbauter Gasdruckfedern vor Ort zu vermeiden.

Die Erfindung wird anhand der nachfolgenden Figur ausführlich erläutert. Es zeigt:

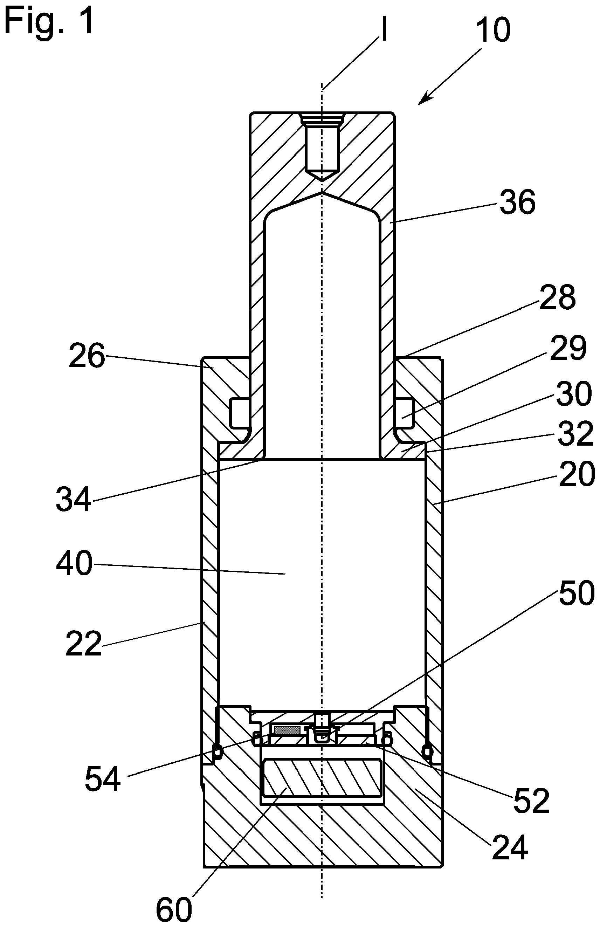

- Fig. 1: einen Längsschnitt durch ein Ausführungsbeispiel einer erfindungsgemäßen Gasdruckfeder.

Fig. 1 zeigt einen Längsschnitt durch ein Ausführungsbeispiel einer Gasdruckfeder 10, welcher ein Gehäuse 20 und einen in dem Gehäuse 20 verschiebbar angeordneten Kolben 30 aufweist. Das Gehäuse 20 ist zylindrisch, insbesondere kreiszylindrisch, ausgebildet und weist eine Wandung 22, ein Bodenteil 24 und ein Deckelteil 26 auf. Das Deckelteil 26 ist insbesondere einstückig mit der Wandung 22 verbunden, während das Bodenteil 24 vorteilhafterweise lösbar an der Wandung 22 angeordnet ist und beispielsweise mittels einer Schraubverbindung mit der Wandung 22 verbindbar ist.

Der Kolben 30 ist zylindrisch ausgebildet mit einer Außenfläche 32 sowie einer Stirnseite 34 und einer Kolbenstange 36. Das Deckelteil 26 des Gehäuses 20 weist eine Öffnung 28 auf, durch welche die Kolbenstange 36 aus dem Gehäuse 20 nach außen geführt ist.

Das Gehäuse 20 weist eine Längsachse 1 auf, entlang welcher der Kolben 30 in dem Gehäuse 20 verschiebbar angeordnet ist.

Zwischen dem Kolben 30 und dem Gehäuse 20 ist eine Gaskompressionskammer 40 gebildet. Die Gaskompressionskammer 40 ist in der Öffnung 28, durch welche die Kolbenstange 36 aus dem Gehäuse 20 nach außen geführt ist, durch eine Dichtung 29 abgedichtet. An der Außenfläche 32 des Kolbens kann Gas von einem ersten Teil der Gaskompressionskammer 40, welcher zwischen der Stirnseite 34 des Kolbens 30 und dem Bodenteil 24 des Gehäuses 20 angeordnet ist, in einen zweiten Teil der Gaskompressionskammer 40, welcher zwischen dem Kolben 30 und dem Deckelteil 26 gebildet ist, strömen. Auf diese Weise wird eine sogenannte Zwei-Kammer-Gaskompressionskammer 40 gebildet.

In einer alternativen, nicht dargestellten Ausführungsform kann es sich bei der Gasdruckfeder 10 auch um eine Gasdruckfeder mit einer Ein-Kammer-Gaskompressionskammer 40 handeln. Bei einer Ein-Kammer-Gaskompressionskammer 40 ist der Kolben 30 an seiner Außenfläche 32 über eine Dichtung gegenüber der Wandung 22 des Gehäuses 20 abgedichtet, so dass ein Gasfluss von dem Bereich zwischen der Stirnseite 34 des Kolbens und dem Bodenteil 24 des Gehäuses 20 in den Bereich zwischen dem Kolben 30 und dem Deckelteil 26 unterbunden wird. Eine Dichtung in der Öffnung 28, durch welche die Kolbenstange 36 aus dem Gehäuse 20 geführt wird, kann dann entfallen.

In der Gasdruckfeder 10, insbesondere der Gaskompressionskammer 40, ist ein Gas, beispielsweise Stickstoff, angeordnet, welches bei Einführen des Kolbens 30 in das Gehäuse 20 verdichtet wird, so dass sich ein Druck aufbaut. Dieser erzeugt eine Rückstellkraft auf den Kolben 30. Derartige Gasdruckfedern 10 werden insbesondere in Werkzeugen oder Maschinen eingesetzt.

Die Gasdruckfeder 10 weist einen Sensor 50 zur Detektion einer physikalischen Größe auf. Beispielsweise kann der Sensor 50 als Drucksensor, Temperatursensor, Kraftsensor oder Wegsensor ausgebildet sein. In einer bevorzugten Ausführungsform kann der Sensor 50 als kombinierter Druck- und Temperatursensor ausgebildet sein. Der Sensor 50 ist beispielsweise in das Bodenteil 24 derart integriert, dass er physikalische Größen, beispielsweise Druck und/oder Temperatur, in der Gaskompressionskammer 40 detektieren kann. Der Sensor 50 kann als Dünnfilm -Sensorelement ausgebildet sein. Derartige Dünnfilm-Sensorelemente sind besonders kompakt aufgebaut und robust.

Die Energieversorgung des Sensors 50 kann mittels einer Batterie 60, die insbesondere in dem Bodenteil 24 angeordnet ist, mittels eines Kabels oder mittels Energy Harvesting erfolgen.

Der Sensor 50 ist insbesondere derart in dem Bodenteil 24 angeordnet, dass seine detektierende Seite in direkter Verbindung mit der Gaskompressionskammer 40 steht. Dazu ist der Sensor 50 in einer von der Gaskompressionskammer 40 in einen Hohlraum 25 des Bodenteils 24 führenden Durchgangsöffnung druckdicht angeordnet. Der Sensor 50 ist auf einer in dem Hohlraum 25 des Bodenteils 24 angeordneten Platine 52 kontaktiert. Auf der Platine 52 ist eine Elektronik zur Weiterverarbeitung, beispielsweise Speicherung und Auswertung, der von dem Sensor 50 detektierten Werte der physikalischen Größen angeordnet. Die Elektronik weist insbesondere eine Auswerteeinheit 54 auf, welche die von dem Sensor 50 detektierten Größen, vorzugsweise über die gesamte Lebensdauer der Gasdruckfeder 10, auswertet und insbesondere in einem Speicher in Abhängigkeit von der Zeit hinterlegt. Die Auswerteeinheit 54 kann auch außerhalb der Gasdruckfeder 10 angeordnet sein, beispielsweise, um an einer zentralen Erfassungsstelle die von den Sensoren 50 verschiedener Gasdruckfedern 10 detektierten Werte zentral auszuwerten. Vorteilhafterweise ist jedoch die Auswerteeinheit an, besonders bevorzugt in der Gasdruckfeder 10 angeordnet, damit eine Auswertung auch direkt an jeder Gasdruckfeder 10 erfolgen kann.

Die Auswerteeinheit 54 ist ausgebildet, die Bestimmung der Restlebensdauer der Gasdruckfeder 10 durchzuführen. Die Restlebensdauer wird aus den mit dem wenigstens einen Sensor 50 detektierten Werten der wenigstens einen physikalischen Größe bestimmt, insbesondere durch Vergleich mit einem Kennfeld. Das Kennfeld wird dabei in Langzeitversuchen mit Gasdruckfedern 10 ermittelt. Zur Erstellung des Kennlinienfelds, kurz Kennfeld genannt, wird die Abhängigkeit der Lebensdauer bei Variation einer physikalischen Größe, während andere physikalische Größen konstant gehalten werden, bestimmt. Das so bestimmte Kennfeld ist vorteilhafterweise in der Auswerteeinheit 54 hinterlegt, um durch Vergleich der mit dem wenigstens einen Sensor 50 detektierten Werten der wenigstens einen physikalischen Größe die Lebensdauerbestimmung zu ermöglichen. Insbesondere werden sämtliche von dem Sensor 50 detektierten Werte zur Bestimmung der Restlebensdauer herangezogen. Dabei wird insbesondere berücksichtigt, dass der Einsatz der Gasdruckfeder 10 unter extremen Bedingungen einen Einfluss auf die Restlebensdauer aufweist, sodass insbesondere die Minimal- und Maximalwerte der detektierten physikalischen Größe sowie große Gradienten der detektierten physikalischen Größe in die Bestimmung der Restlebensdauer einfließen.

Die aktuelle Restlebensdauer ist in dem Speicher der Auswerteeinheit 54 hinterlegt und kann jederzeit aktuell aus der Gasdruckfeder 10 ausgelesen werden.

Die Auswerteeinheit 54 kann weiterhin die detektierten Werte der wenigstens einen physikalischen Größe mit hinterlegten Werten vergleichen, um daraus Schlüsse über den aktuellen Zustand der Gasdruckfeder zu ziehen. Beispielsweise kann bei dem Vergleich ermittelt werden, ob ein minimaler Druck unterschritten oder ein maximaler Druck überschritten wird, um auf den Füllstand der Gasdruckfeder 10 Rückschlüsse zu ziehen und gegebenenfalls einen Alarm auszulösen, wenn die Gasdruckfeder 10 fehlerbehaftet ist.

Die Angabe der Restlebensdauer sowie gegebenenfalls das Ergebnis eines Vergleichs der detektierten Werte mit physikalischen Größen oder auch lediglich die Ausgabe eines entsprechenden Alarms kann direkt an der Gasdruckfeder 10, beispielsweise in Form von optischen, akustischen oder elektronischen Anzeigemitteln, beispielsweise in Form von farbigen LEDs, akustischen Signalen oder Informationen auf einem Display, und insbesondere auch in Form von entsprechenden Alarmsignalen, ausgegeben werden.

Alternativ oder zusätzlich ist es möglich, die von dem Sensor 50 detektierten und die von der Auswerteeinheit 54 ermittelten Daten an eine extern angeordnete Vorrichtung zur Überwachung der Gasdruckfeder 10 auszugeben. Dazu weist die Gasdruckfeder 10 eine Datenübertragungsschnittstelle auf, welche vorzugsweise als Kabelanschluss, als lichtgestützte Schnittstelle, als Schnittstelle mit induktiver oder kapazitiver Kopplung oder als drahtlose Schnittstelle, insbesondere als Funkmodul, ausgebildet ist. Dadurch wird es ermöglicht, die von der Gasdruckfeder 10 ermittelten Daten regelmäßig oder zu gewünschten Zeitpunkten, beispielsweise vor einer erneuten Inbetriebnahme oder einem neuen Einbau der Gasdruckfeder 10, auszulesen, um Informationen über die aktuelle Restlebensdauer zu erhalten oder den Zustand der Gasdruckfeder 10 im Betrieb regelmäßig überwachen zu können. Da bei einer eingebauten Gasdruckfeder 10 in Abhängigkeit von der aktuellen Einbausituation, insbesondere auch in Abhängigkeit von der Position des Kolbens 30 in dem Gehäuse 20, keine Ausgabe von Daten von der Gasdruckfeder 10 möglich ist, da die Gasdruckfeder 10 in der Maschine oder dem Werkzeug abgeschirmt ist, werden vorteilhafterweise Daten von der Datenübertragungsschnittstelle nur dann übertragen, wenn eine Datenübertragung nach außen durch ein geöffnetes Werkzeug, welche oft mit einem ausgefahrenen Kolben aus dem Gehäuse 20 korreliert, möglich ist.

Zusätzlich weist eine externe Vorrichtung den Vorteil auf, dass bei mehreren eingebauten Gasdruckfedern 10 nicht regelmäßig jede einzelne Gasdruckfeder 10 nach an der Gasdruckfeder 10 angezeigten Alarmsignalen überprüft werden muss, sondern die Vorrichtung zur Überwachung der Gasdruckfedern 10 Mittel zur Abgabe eines Alarmsignals aufweisen kann, insbesondere eines optischen, akustischen oder elektronischen Alarmsignals, um auf den bevorstehenden Ausfall oder einen Fehler an einer Gasdruckfeder 10 hinzuweisen, insbesondere mit dem Verweis auf die konkrete Gasdruckfeder 10, falls mehrere Gasdruckfedern eingebaut sein sollten.

In einer Ausführungsform kann die Gasdruckfeder 10 folgende Funktionen aufweisen: Die Gasdruckfeder 10 umfasst wenigstens einen Sensor 50, welcher eine oder mehrere der folgenden physikalischen Größen detektieren kann: Temperatur an der Dichtung 29 der Gasdruckfeder 10, Druck in der Gaskompressionskammer 40 der Gasdruckfeder 10, Temperatur beispielsweise in der Gaskompressionskammer 40 oder am Gehäuse 20 der Gasdruckfeder 10, Weg des Kolbens 30, Normalkraft auf das Gehäuse 20 der Gasdruckfeder 10, Seitenkraft auf das Gehäuse 20 der Gasdruckfeder 10 und Beschleunigung des Kolbens 30 der Gasdruckfeder 10. Die detektierten Werte der einen oder mehreren physikalischen Größen werden vorteilhafterweise einer Signalvorverarbeitung unterzogen und in einen Mikrocontroller der Auswerteeinheit 54 übertragen. Dort können die detektierten Werte im Hinblick auf den Istwert, auf Maximal- und Minimalwerte sowie im Hinblick auf Gradienten, maximale Gradienten und minimale Gradienten ausgewertet werden und dabei mit hinterlegten Werten, insbesondere hinterlegten Grenzwerten, verglichen werden. Wird ein maximaler Grenzwert über- oder ein minimaler Grenzwert unterschritten, kann eine Ausgabe der Daten oder ein entsprechendes Signal über eine Schnittstelle, beispielsweise eine Kabel- oder eine Funkschnittstelle, ausgegeben und/oder ggfs. eine Sicherheitsfunktion ausgelöst werden. Die Schnittstelle kann dazu mit einer optischen Anzeige und/oder mit einer Maschinensteuerung oder auch einem sonstigen Auslesegerät verbunden sein.

Die detektierten Werte werden mit einem Zeitstempel versehen in dem Speicher abgelegt. Beispielsweise ergibt sich dabei eine Historie über die erfolgten Hübe, wobei jeder Hub mit einem Zeitstempel versehen und die herrschenden Drücke und Temperaturen hinterlegt sind. Vorteilhafterweise erfolgt eine Datenkompression. In dem Speicher ist das Kennfeld abgelegt, welches zum Zeitpunkt der Inbetriebnahme der Gasdruckfeder 10 bereits durch Messreihen ermittelt wurde.

Die Lebensdauer der Gasdruckfeder 10 wird bestimmt, indem die Historie der im Speicher abgelegten Werte in den Mikrokontroller eingelesen wird, daraus ein für die konkrete Gasdruckfeder 10 zu dem entsprechenden Zeitpunkt charakteristisches aktuelles Lastkollektiv ermittelt wird und mit dem Kennfeld verglichen wird. Die Lebensdauer kann über die Schnittstelle ausgegeben werden, beispielsweise ebenfalls an die optische Anzeige oder das sonstige Auslesegerät. Die Restlebensdauer kann beispielsweise in Form von noch möglichen Hüben angegeben werden.

### Bezugszeichenliste

- 10: Gasdruckfeder
- 20: Gehäuse
- 22: Wandung
- 24: Bodenteil
- 24a: erstes Bodenteilelement
- 24b: zweites Bodenteilelement
- 25: Hohlraum
- 26: Deckelteil
- 28: Öffnung
- 29: Dichtung
- 30: Kolben
- 32: Außenfläche
- 34: Stirnseite
- 36: Kolbenstange
- 40: Gaskompressionskammer
- 50: Sensor
- 52: Platine
- 54: Auswerteeinheit
- 60: Batterie
- 1: Längsachse

## Patentansprüche

1. Gasdruckfeder (10) mit einem zylindrischen Gehäuse (20), welches eine Wandung (22), ein Bodenteil (24) und ein eine Öffnung (28) aufweisendes Deckelteil (26) sowie eine Längsachse (1) aufweist, und mit einem in dem Gehäuse (20) entlang der Längsachse (1) verschiebbaren Kolben (30) mit einer Außenfläche (32) und einer Stirnseite (34), wobei zwischen dem Kolben (30) und dem Gehäuse (20) eine Gaskompressionskammer (40) gebildet ist und wobei die Gasdruckfeder (10) wenigstens einen Sensor (50) zur Detektion wenigstens einer physikalischen Größe aufweist, wobei Mittel zur Bestimmung der Restlebensdauer der Gasdruckfeder (10) aus den mit dem wenigstens einen Sensor (50) detektierten Werten der wenigstens einen physikalischen Größe vorhanden sind, dass die Mittel eine Auswerteeinheit (54) aufweisen, in welcher die Bestimmung der Restlebensdauer der Gasdruckfeder (10) erfolgt, dass die Auswerteeinheit (54) einen Speicher zur Speicherung der mit dem wenigstens einen Sensor (50) detektierten Werte der wenigstens einen physikalischen Größe in Abhängigkeit von der Zeit aufweist, **dadurch gekennzeichnet, dass** die Auswerteeinheit (54) derart ausgebildet ist, dass die mit dem wenigstens einen Sensor (50) detektierten Werte der wenigstens einen physikalischen Größe in Abhängigkeit von der Zeit gespeichert und zur Bestimmung der Restlebensdauer herangezogen werden und wobei die Auswerteeinheit (54) derart ausgebildet ist, dass die Bestimmung der Lebensdauer durch Vergleich der mit dem wenigstens einen Sensor (50) detektierten Werte der wenigstens einen physikalischen Größe in Abhängigkeit von der Zeit mit einem in der Auswerteeinheit (54) hinterlegten, in Langzeitversuchen mit Gasdruckfedern ermittelten Kennfeld erfolgt.

2. Gasdruckfeder nach Anspruch 1,
**dadurch gekennzeichnet, dass** die Mittel an oder in der Gasdruckfeder (10) angeordnet sind.

3. Gasdruckfeder nach einem der Ansprüche 1 bis 2,
**dadurch gekennzeichnet, dass** die Auswerteeinheit (54) die detektierten Werte der wenigstens einen physikalischen Größe mit hinterlegten Werten vergleicht.

4. Gasdruckfeder nach einem der vorhergehenden Ansprüche,
**dadurch gekennzeichnet, dass** die physikalischen Größen eine oder mehrere von Druck, Temperatur, Geschwindigkeit, Kraft, Vibration, Dehnung und/oder Weg sind.

5. Gasdruckfeder nach einem der vorhergehenden Ansprüche,
**dadurch gekennzeichnet, dass** die Gasdruckfeder (10) wenigstens einen Druck- und einen Temperatursensor aufweist.

6. Gasdruckfeder nach einem der vorhergehenden Ansprüche,
**dadurch gekennzeichnet, dass** die Energieversorgung des Sensors (50) mittels einer Batterie (60), mittels eines Kabels oder mittels Energy Harvesting erfolgt.

7. Gasdruckfeder nach einem der vorhergehenden Ansprüche,
**dadurch gekennzeichnet, dass** die Mittel eine Datenübertragungsschnittstelle aufweisen, welche vorzugsweise als Kabelanschluss, als lichtgestützte Schnittstelle, als Schnittstelle mit induktiver oder kapazitiver Kopplung oder als drahtlose Schnittstelle, insbesondere als Funkmodul, ausgebildet ist.

8. Gasdruckfeder nach einem der vorhergehenden Ansprüche,
**dadurch gekennzeichnet, dass** die Datenübertragungsschnittstelle zyklisch oder in Abhängigkeit von der Position des Kolbens in dem Gehäuse oder in Abhängigkeit von der aktuellen Einbausituation aktivierbar ist.

9. Gasdruckfeder nach einem der vorhergehenden Ansprüche,
**dadurch gekennzeichnet, dass** die Gasdruckfeder (10) Mittel zur Abgabe eines Alarmsignals, insbesondere eines optischen, akustischen oder elektronischen Alarmsignals, und/oder Mittel zum Auslösen einer Sicherheitsfunktion, beispielsweise zum Anhalten einer Maschine oder zum Drucklosstellen der Gasdruckfeder (10), aufweist.

10. Vorrichtung zur Überwachung wenigstens einer, vorzugsweise mehrerer Gasdruckfedern (10) nach einem der vorhergehenden Ansprüche, wobei die Vorrichtung wenigstens eine, vorzugsweise mehrere Gasdruckfedern (10) nach einem der vorhergehenden Ansprüche, wenigstens eine Auswerteeinheit und Mittel zur Übertragung von Signalen zwischen der Auswerteeinheit und jeder der Gasdruckfedern aufweist.

11. Vorrichtung nach Anspruch 10,
**dadurch gekennzeichnet, dass** die Auswerteeinheit der Vorrichtung Mittel zur Abgabe eines Alarmsignals, insbesondere eines optischen, akustischen oder elektronischen Alarmsignals, aufweist.

## Claims

1. Gas compression spring (10) with a cylindrical housing (20), which comprises a wall (22), a bottom part (24) and a cover part (26) having an opening (28) as well as a longitudinal axis (I), and with a piston (30) which has an outer surface (32) and an end face (34) and is displaceable in the housing (20) along the longitudinal axis (I), wherein a gas compression chamber (40) is formed between the piston (30) and the housing (20) and wherein the gas compression spring (10) has at least one sensor (50) for detection of at least one physical variable, wherein means for determining the remaining service life of the gas compression spring (10) from the values of the at least one physical variable detected by the at least one sensor (50), wherein the means have an evaluation unit (54) in which the determination of the remaining service life of the gas compression spring (10) takes place, wherein the evaluation unit (54) has a store for storage of the values of the at least one physical variable detected by the at least one sensor (50) as a function of time, **characterised in that** the evaluation unit (54) is designed in such a way that the values of the at least one physical variable detected by the at least one sensor (50) as a function of time are stored and are used for determination of the remaining service life, and wherein the evaluation unit (54) is designed in such a way that the determination of the remaining service life takes place by comparison of the values of the at least one physical variable detected by the at least one sensor (50) as a function of time with a characteristic field determined in long-term tests with gas compression springs and stored in the evaluation unit (54).

2. Gas compression spring according to claim 1, **characterised in that** the means are arranged on or in the gas compression spring (10).

3. Gas compression spring according to one of claims 1 to 2, **characterised in that** the evaluation unit (54) compares the detected values of the at least one physical variable with stored values.

4. Gas compression spring according to one of the preceding claims, **characterised in that** the physical variables are one or more of pressure, temperature, speed, force, vibration, expansion and/or distance.

5. Gas compression spring according to one of the preceding claims, **characterised in that** the gas compression spring (10) has at least one pressure sensor and one temperature sensor.

6. Gas compression spring according to one of the preceding claims, **characterised in that** the energy is supplied to the sensor (50) by means of a battery (60), by means of a cable or by means of energy harvesting.

7. Gas compression spring according to one of the preceding claims, **characterized in that** the means have a data transmission interface which is preferably designed as a cable connection, as a light-assisted interface, as an interface with inductive or capacitive coupling or as a wireless interface, in particular as a wireless module.

8. Gas compression spring according to one of the preceding claims, **characterised in that** the data transmission interface can be activated cyclically or as a function of the position of the piston in the housing or as a function of the in current installation situation.

9. Gas compression spring according to one of the preceding claims, **characterised in that** the gas compression spring (10) has means for emitting an alarm signal, in particular an optical, acoustic or electronic alarm signal, and/or means for triggering a safety function, for example for stopping a machine or for rendering the gas compression spring (10) pressureless.

10. Device for monitoring at least one, preferably a plurality of gas compression spring(s) (10) according to one of the preceding claims, wherein the device has at least one, preferably a plurality of gas compression spring(s) (10) according to one of the preceding claims, at least one evaluation unit and means for transmitting signals between the evaluation unit and each of the gas compression springs.

11. Device according to claim 10, **characterised in that** the evaluation unit of the device has means for emitting an alarm signal, in particular an optical, acoustic or electronic alarm signal.

## Revendications

1. Vérin à gaz (10) comportant un boîtier cylindrique (20) comportant une paroi (22), un fond (24) et un couvercle (26) et ayant une ouverture (28), un axe longitudinal (1), ainsi qu'un piston (30) mobile en translation dans le boîtier (20) le long de l'axe longitudinal (1) et comportant une surface externe (32) et une face frontale (34), entre le piston (30) et le boîtier (20) étant formée une chambre de compression de gaz (40), et le vérin à gaz (10) comprenant au moins un capteur (50) permettant de détecter au moins une grandeur physique,
des moyens étant prévus pour permettre de déterminer la durée de vie résiduelle du vérin à gaz (10) à l'aide des valeurs de la grandeur physique détectée avec le capteur (50), les moyens comportant une unité d'exploitation (54) dans laquelle est effectuée la détermination de la durée de vie résiduelle du vérin à gaz (10), l'unité d'exploitation (54) comportant une mémoire permettant d'enregistrer les valeurs détectées par le capteur (50) de la grandeur physique en fonction du temps, **caractérisé en ce que**
l'unité d'exploitation (54) est réalisée de sorte que les valeurs de la grandeur physique en fonction du temps détectées avec le capteur (50) soient enregistrées et utilisées pour déterminer la durée de vie résiduelle, et de sorte que la détermination de la durée de vie soit effectuée par comparaison des valeurs de la grandeur physique en fonction du temps détectées par le capteur (50), avec un champ caractéristique déposé dans l'unité d'exploitation (54) et déterminé par des recherches de longue durée avec des vérins à gaz.

2. Vérin à gaz conforme à la revendication 1,
**caractérisé en ce que**
les moyens sont montés sur ou dans le vérin à gaz (10).

3. Vérin à gaz conforme à l'une des revendications 1 et 2,
**caractérisé en ce que**
l'unité d'exploitation (54) compare les valeurs de la grandeur physique détectées avec des valeurs déposées.

4. Vérin à gaz conforme à l'une des revendications précédentes,
**caractérisé en ce que**
la grandeur physique est une pression et/ou une température et/ou une vitesse et/ou une force et/ou une vibration et/ou une expansion et/ou une course.

5. Vérin à gaz conforme à l'une des revendications précédentes,
**caractérisé en ce qu'**
il comporte au moins un capteur de pression et un capteur de température.

6. Vérin à gaz conforme à l'une des revendications précédentes,
**caractérisé en ce que**
l'alimentation en énergie du capteur (50) est effectuée au moyen d'une batterie (60), d'un câble ou par récupération d'énergie.

7. Vérin à gaz conforme à l'une des revendications précédentes,
**caractérisé en ce que**
les moyens comportent une interface de transmission de données réalisée de préférence sous la forme d'une connexion par câble, d'une interface à assistance optique, d'une interface à couplage inductif ou capacitif ou sur la forme d'une interface sans fil, en particulier d'un module radio.

8. Vérin à gaz conforme à l'une des revendications précédentes,
**caractérisé en ce que**
l'interface de transmission de données peut être activée de façon cyclique ou en fonction de la position du piston dans le boîtier ou en fonction de la situation de montage actuelle.

9. Vérin à gaz conforme à l'une des revendications précédentes,
**caractérisé en ce qu'**
il comporte des moyens permettant de délivrer un signal d'alarme, en particulier un signal d'alarme optique, acoustique ou électronique, et/ou des moyens permettant de déclencher une fonction de sécurité, par exemple de stopper une machine ou de dépressurer le vérin à gaz (10).

10. Procédé permettant de surveiller au moins un et de préférence plusieurs vérins à gaz (10) conforme(s) à l'une des revendications précédentes, ce dispositif comprenant au moins un et de préférence plusieurs vérin(s) à gaz (10) conforme(s) à l'une des revendications précédentes, au moins une unité d'exploitation et des moyens permettant de transmettre des signaux entre l'unité d'exploitation et chacun des vérins à gaz.

11. Dispositif conforme à la revendication 10,
**caractérisé en ce que**
l'unité d'exploitation comporte des moyens permettant de délivrer un signal d'alarme, et en particulier un signal d'alarme optique acoustique ou électronique.
